# EUROPÄISCHE PATENTSCHRIFT

(11) **EP 3 213 952 B1**
(45) Veröffentlichungstag und Bekanntmachung des Hinweises auf die Patenterteilung: **26.08.2020**
(21) Anmeldenummer: 16158337.2
(22) Anmeldetag: 02.03.2016
(51) Int. Cl.: B60L 50/90, B60L 50/15, B60L 50/51, B60L 58/18, B60L 58/19, B60L 58/20, B60L 50/60, B60L 3/00, B60L 1/00, B60L 8/00, B60L 9/30, B60L 9/22, B60L 15/00, B60L 15/38, B60L 15/32

(54) **ELEKTRISCHES ANTRIEBSSYSTEM FÜR EIN LUFTFAHRZEUG SOWIE BETRIEBSVERFAHREN**
ELECTRIC DRIVE SYSTEM FOR AN AIRCRAFT AND METHOD OF OPERATING SAME
SYSTEME D'ENTRAINEMENT ELECTRIQUE POUR UN AERONEF ET PROCEDE DE FONCTIONNEMENT

(43) Veröffentlichungstag der Anmeldung: 06.09.2017
(73) Patentinhaber: Airbus Defence and Space GmbH, 82024 Taufkirchen (DE); Airbus Operations GmbH, 21129 Hamburg (DE)
(72) Erfinder: Wangemann, Jörg, 39118 Magdeburg (DE); Schult, Jens, 21435 Stelle (DE)
(74) Vertreter: Krebs, Jörg

(56) Entgegenhaltungen:
- EP-A1- 1 950 879
- DE-A1-102005 026 779
- DE-A1-102010 001 250
- DE-A1-102011 013 884
- DE-A1-102013 102 194
- DE-A1-102014 203 553
- DE-A1-102014 203 563
- DE-A1-102014 212 935
- DE-A1-102014 223 224
- US-A- 5 773 962
- US-A1- 2012 119 573
- Anonymous ET AL: "Relais aktuell, gemeinsame Website der Deutschen Schaltrelaishersteller im ZVEI", , 4 November 2014 (2014-11-04), XP055469379, Retrieved from the Internet: URL:http://www.schaltrelais.de/2014-elemen tarrelais-funktionale-sicherheit.htm [retrieved on 2018-04-23]

## Beschreibung

Die Erfindung betrifft ein elektrisches Antriebssystem für ein Luftfahrzeug. Weiter betrifft die Erfindung ein Luftfahrzeug mit einem solchen elektrischen Antriebssystem.

Ein Gegenstand aktueller Forschungen auf dem Gebiet der Luftfahrt ist die Erprobung neuer und alternativer Antriebskonzepte für den Vortrieb oder für Nebenaggregate von Luftfahrzeugen. Ein Beispiel für ein elektrisches Antriebssystem für Luftfahrzeuge ist das Vortriebs-Antriebssystem des Airbus E-Fan, siehe https://de.wikipedia.org/wiki/airbus_e-fan, Stand 12. Februar 2016. Der Airbus E-Fan ist ein zweisitziges Elektroflugzeug der Airbus Group Innovations und dient zur Erprobung neuer Antriebskonzepte. Der Antrieb erfolgt über zwei Mantelpropeller mit variablem Pitch, die jeweils über Elektromotoren angetrieben werden. Zur Energiespeicherung sind in den Tragflächen Lithium-Ionen-Akkus untergebracht.

Man ist bestrebt, neben derartigen Akkumulatoren auch andere elektrische Energiequellen, wie z.B. Solarzellen und Solarzellenpacks, Photovoltaikmodule, Brennstoffzellen oder dergleichen, einzusetzen. In der Regel liefern derartige elektrische Energiequellen eine Gleichspannung. Zum Antrieb wird die Gleichspannung häufig in Wechselrichtern zu Wechselspannung umgesetzt, um so als Wechselspannungsmaschinen ausgebildete elektrische Maschinen - insbesondere Wechselstrommotoren - anzutreiben.

An Luftfahrzeugen eingesetzte Antriebe sind häufig sicherheitsrelevant. Die meisten elektrischen Antriebe an Luftfahrzeugen sollten daher redundant ausgelegt werden.

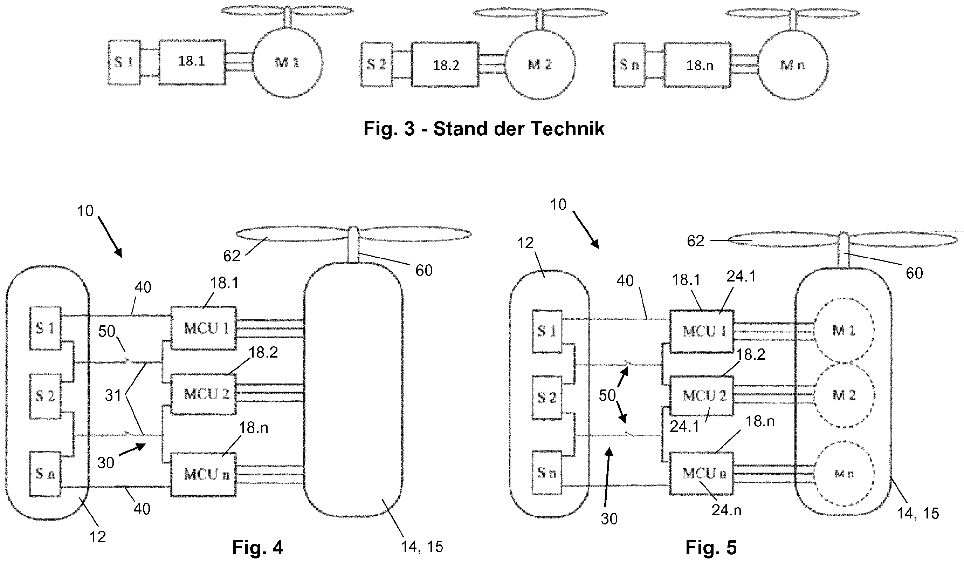

Das derzeitige Konzept zum Erreichen von Redundanz bei elektrischen Antriebssystemen in Luftfahrzeugen ist als Beispiel in Fig. 3 wiedergegeben. Fig. 3 zeigt zum Schaffen einer Redundanz mehrere elektrische Motoren M1, M2, ..., Mn, die jeweils durch eine eigene Gleichspannungsquelle S1, S2, ..., Sn über einen eigenen Wechselrichter 18-1, 18-2, ... 18-n mit elektrischer Spannung versorgt werden. Hat man demnach z.B. drei oder vier Motoren, um Antriebsredundanz, beispielsweise für ein Vortriebssystem, zu schaffen, dann sieht man entsprechend der Anzahl von Motoren auch die gleiche Anzahl von Getrieben für den Propeller oder dergleichen Vortriebssysteme und die entsprechende Anzahl von Leistungselektronik, die den jeweiligen Motor antreibt, vor. Dies führt dazu, dass für das Schaffen notwendiger Redundanz als Sicherheitsreserve gegen Ausfall einer Antriebskomponente ein sehr großes Gewicht und auch ein Kostennachteil in Kauf genommen werden muss.

Weiter wird zum Stand der Technik auf folgende Literaturstellen verwiesen:
[1] Jose Rodriguez, Senior Member, IEEE, Jih-Sheng Lai, Senior Member, IEEE, and Fang Zheng Peng, Senior Member, IEEE; "Multilevel Inverters: A Survey of Topologies, Controls, and Application.", IEEE TRANSACTIONS ON INDUSTRIAL ELECTRONICS, Vol. 49, No. 4, August 2002.
[3] DE 10 2014 203 553 A1 beschreibt ein Bordnetz für einen Antriebsstrang mit redundanten Wechselrichtern.
[4] DE 10 2014 212 935 A1 beschreibt ein Antriebssystem mit redundanten Wechselrichtern und redundanten Energiequellen.
[6] DE 10 2013 102 194 A1 beschreibt eine Antriebseinrichtung für ein Flugzeug.
[7] US 2012/0119573 A beschreibt ein Bordnetz eines Fahrzeugs mit redundanten Energiequellen
[8] DE 10 2010 001 250 A1 beschreibt ein Bordnetz eines Fahrzeugs mit zwei Stromkreisen und einer elektrischen Maschine.

In diesen Literaturstellen sind unterschiedliche Konzepte von Leistungselektronikschaltungen für elektrische Antriebssysteme auf anderen Gebieten als der Luftfahrzeugtechnologie beschrieben.

Dabei ist es aus [4] bekannt, mehrere Gleichspannungsquellen in Reihe zu schalten. Parallel an eine erste Gleichspannungsquelle ist ein erster Wechselrichter eines ersten elektrischen Maschinenmoduls geschaltet und parallel an eine zweite Gleichspannungsquelle ist ein zweiter Wechselrichter eines zweiten elektrischen Maschinenmoduls geschaltet. Dadurch soll ein redundantes System realisiert werden.

Aufgabe der Erfindung ist es, bei einem elektrischen Antriebssystem für Luftfahrzeuge mit modularar elektrischer Energieversorgung bei schwankenden Leistungen der einzelnen Spannungsquellen eine alternative Möglichkeit zum Ausbalancieren der Leistungen zwischen den einzelnen Spannungsquellen zu schaffen.

Zum Lösen dieser Aufgabe schlägt die Erfindung ein elektrisches Antriebssystem gemäß Anspruch 1 vor. Ein damit versehenes Luftfahrzeug ist Gegenstand des Nebenanspruches.

Vorteilhafte Ausgestaltungen der Erfindung sind Gegenstand der Unteransprüche. Die Erfindung ist durch die Ansprüche definiert.

Gemäß einem Aspekt schafft die Erfindung ein elektrisches Antriebssystem für ein Luftfahrzeug, umfassend wenigstens eine erste und eine zweite elektrische Gleichspannungsquelle zum Liefern einer Gleichspannung, ein erstes elektrisches Maschinenmodul und ein zweites elektrisches Maschinenmodul, wobei die elektrischen Maschinenmodule dazu ausgebildet sind, elektrische Wechselspannung in mechanische Bewegung umzuwandeln und/oder mechanische Bewegung in elektrische Wechselspannung umzuwandeln, wobei das erste elektrische Maschinenmodul mit einem ersten Wechselrichter verbunden ist und das zweite elektrische Maschinenmodul mit einem zweiten Wechselrichter verbunden ist, wobei der erste und der zweite Wechselrichter in Reihe geschaltet sind und die erste und die zweite Gleichspannungsquelle in Reihe geschaltet sind, um eine Gesamtgleichspannung zu erzeugen, an die die in Reihe geschalteten Wechselrichter angeschlossen sind, wobei die Wechselrichter jeweils eine Spannungsmesseinrichtung zum Messen der an dem jeweiligen Wechselrichter anliegenden Wechselrichter-Gleichspannung und eine Wechselrichtersteuerung zum Steuern des Betriebs der Wechselrichter in Abhängigkeit von der Wechselrichter-Gleichspannung aufweisen, wobei der erste und der zweite Wechselrichter mittels einer eigenen, einen Wechselrichter-Mittelabgriff aufweisenden Wechselrichterverbindungsleitung in Reihe geschaltet sind, wobei eine Ausgleichsleitung zwischen einem Spannungsquellenmittelabgriff zwischen der ersten und der zweiten Spannungsquelle und dem Wechselrichter-Mittelabgriff zwischen dem ersten und dem zweiten Wechselrichter vorgesehen ist, und
die erste und die zweite Wechselrichtersteuerung mittels einer Kommunikationseinrichtung kommunikativ verbunden sind, um zumindest eine Information über die gemessenen Wechselrichter-Gleichspannungen in Echtzeit auszutauschen, wobei eine Ausgleichsstrommesseinrichtung zum Messen des durch die Ausgleichsleitung fließenden Ausgleichstroms vorgesehen ist,
und eine Information über den gemessenen Ausgleichsstrom über die Kommunikationseinrichtung an wenigstens eine der Wechselrichtersteuerungen übertragbar ist, um die Wechselrichter in Abhängigkeit von dem gemessenen Ausgleichsstrom und der Wechselrichter-Gleichspannung zu steuern.

Es ist bevorzugt, dass wenigstens einer der Wechselrichter eine Wechselrichterstrommesseinrichtung zum Messen des durch den Wechselrichter fließenden Wechselrichter-Gleichspannungsstroms aufweist.

Es ist bevorzugt, dass eine Information über den gemessenen Wechselrichter-Gleichspannungsstrom über die Kommunikationseinrichtung in Echtzeit übertragbar ist.

Es ist bevorzugt, dass die Wechselrichtersteuerung des wenigstens einen Wechselrichters dazu ausgebildet ist, den Betrieb des wenigstens einen Wechselrichters in Abhängigkeit des gemessenen Wechselrichter-Gleichspannungsstroms zu steuern.

Es ist bevorzugt, dass wenigstens eine Wechselrichtersteuerung dazu ausgebildet ist, den Betrieb des zugeordneten Wechselrichters in Abhängigkeit von dem gemessenen Ausgleichsstroms zu steuern.

Es ist bevorzugt, dass der erste und/oder der zweite Wechselrichter in einer Maschinensteuereinheit (kurz MCU für machine control unit) implementiert ist. Die Maschinensteuereinheit kann z.B. in einer Prozessoreinheit z.B. als Software implementiert sein. Alternativ können auch Ausführungen in Analogtechnik oder als einfache Logik (ohne Software) vorgesehen sein. So können die Kommunikationsleitungen auch Analogsignalübertragungswege zum Übertragen von Analogsignalen sein. Die MCU bildet vorzugsweise eine Einheit mit der Leistungsendstufe/Wechselrichter (nicht dargestellt) zur Ansteuerung bzw. Treiben des Stromes durch die Maschinenphasen. Die Leistungsendstufe ist z.B. ein Inverter (zu Halbbrücken verschaltetet Halbleiterschalter), (A)NPC-Multilevel-Inverter, flying capacitor inverter, MMC-Konverter oder (Q-)Z-Source-Inverter.

Es ist bevorzugt, dass die erste und die zweite Wechselrichtersteuerung dazu ausgebildet sind, die Leistungen zwischen der ersten und der zweiten Gleichspannungsquelle auszugleichen und/oder einzustellen.

Eine bevorzugte Ausgestaltung des elektrischen Antriebssystems ist gekennzeichnet durch wenigstens eine oder mehrere weitere Gleichsspannungsquellen, die mit der ersten und der zweiten Gleichspannungsquelle in Reihe geschaltet sind, um die Gesamtgleichspannung zu erzeugen.

Eine bevorzugte Ausgestaltung des elektrischen Antriebssystems ist gekennzeichnet durch wenigstens eine oder mehrere weitere elektrische Maschinenmodule mit jeweils einem weiteren Wechselrichter, wobei der oder die weiteren Wechselrichter mit dem ersten und zweiten Wechselrichter in Reihe geschaltet sind und ebenfalls eine weitere Wechselrichtergleichspannungsmesseinrichtung und eine weitere Wechselrichtersteuerung aufweisen, die mit der Kommunikationseinrichtung verbunden sind.

Es ist bevorzugt, dass die erste und/oder die zweite Gleichspannungsquelle mit einer Spannungsquellenschalteinrichtung zum Abschalten eines Anschlusses der Gleichspannungsquelle und mit einer Überbrückungseinrichtung zur Überbrückung der abgeschalteten Gleichspannungsquelle versehen sind.

Es ist bevorzugt, dass die Ausgleichsleitung mit einer Ausgleichsleitungsschalteinrichtung versehen ist, mit der die Ausgleichsleitung unterbrochen oder verbunden werden kann.

Es ist bevorzugt, dass die elektrischen Maschinenmodule Motormodule zum Antreiben eines Vortriebs für ein Luftfahrzeug und/oder zum Antreiben von Nebenaggregaten eines Luftfahrzeugs sind.

Es ist bevorzugt, dass die erste und die zweite Gleichspannungsquelle ausgewählt sind aus der Gruppe von Gleichspannungsquellen, die eine Batterie, ein Batteriepack, einen Akkumulator, ein Akkumulatorpack, eine Brennstoffzelle, eine Brennstoffzellengruppe, eine Solarzelle, ein Solarzellenpack und ein Solarpanel umfasst.

Durch die Erfindung wird eine vorteilhafte Nutzung unterschiedlicher Energiequellen unter Verbesserung der Redundanz bei gleichzeitiger Einsparung von Gewicht und Kosten ermöglicht.

Gemäß einem weiteren Aspekt schafft die Erfindung ein mit einem derartigen elektrischen Antriebssystem nach einer der zuvor erläuterten Ausgestaltungen ausgestattetes Luftfahrzeug.

Die Erfindung bezieht sich insbesondere auf die Verwendung von in Reihe geschalteten Spannungsquelleninverter zum Antreiben eines modularen Antriebssystems oder eines modularen Motors eines Luftfahrzeuges.

Besonders bevorzugte Ausgestaltungen der Erfindung haben insbesondere einen, mehrere oder alle der folgenden Vorteile:
a) Spannungsbelastungen, wie z.B. Corona-Entladung, du/dt, an den Motorwicklungen und Motorlagern werden durch reduzierte Spannungsniveaus - ähnlich zu Multilevel-Invertern - reduziert.
b) Die Elektronik ist leicht auf jedes Spannungsniveau skalierbar, das höher als die Nennspannung eines Invertermoduls ist. Die Invertermodule oder Wechselrichtermodule sind insbesondere in Mikrocontrollereinheiten - MCU - implementiert. Durch die einfache Skalierbarkeit braucht man keine speziellen Inverterkonstruktionen für die unterschiedlichen Spannungsniveaus vorsehen.
c) Es kann ein modulares Leistungselektronikkonzept vorgesehen werden, was zu einer höheren Anzahl und damit reduzierten Kosten der einzelnen Elektronikmodule, die für verschiedene Motoren unterschiedlicher Spannung und Leistung verwendet werden können - sofern die Motorwicklungen geeignet angepasst werden können - führt.
d) Es kann eine modulare elektrische Energieversorgung vorgesehen sein. Diese kann z.B. eine Batterie, ein Brennstoffzellensystem oder Solarpanele beinhalten und somit auch allgemeine Gleichspannungsquellen, deren Leistung nicht konstant ist. Ein Ausbalancieren oder Einstellung der Leistungen zwischen den einzelnen Quellen kann durch die MCUs ausgeführt werden, was das Erfordernis eines Batteriemanagementsystems eliminiert.
e) Bisher war der Schutz von Hochspannungs-/Hochleistungsenergiequellen (wie z.B. Batterien) gegen Kurzschlüsse in der Last - z.B. in einer MCU - schwierig, da attraktive und den Anforderungen für Luftfahrzeuge gerechtwerdende entsprechende leistungsfähige Leistungsschalter noch Gegenstand aktueller Forschungen sind, und die derzeit zur Verfügung stehenden Leistungsschalter für bisherige Leistungselektronikarchitekturen noch nicht optimal geeignet sind. Bei dem erfindungsgemäßen Konzept führt ein einzelner Kurzschluss in einer der Wechselrichtereinrichtungen bei der vorgeschlagenen Reihenverbindung der Wechselrichter noch nicht zu einem Kurzschluss der elektrischen Spannungsversorgung - z.B. einer Batterie - was in einigen Anwendungen das Erfordernis einer solchen Schutzschaltung eliminiert.
f) Es kann ein höheres Redundanzniveau und/oder ein höheres Fehlertoleranzniveau sowohl bei der Energiequelle als auch auf Seiten der elektrischen Maschine bzw. der Wechselrichter geschaffen werden. Bei bevorzugten Ausgestaltungen kann in dem Fall eines Ausfalls eines Energiequellenmoduls dieses Energiequellenmodul durch adäquate Mittel überbrückt werden, und die Wechselrichter können bei reduzierter Spannung ihren Betrieb fortsetzen. In dem Fall eines Ausfalls auf Seiten der elektrischen Maschine, wie z.B. dem Motor, - z.B. ein Ausfall mit offener Spannungsverbindung - open circuit - kann das elektrische Maschinenmodul überbrückt werden. In dem Fall eines Ausfalls in dem Wechselrichter - z.B. Kurzschluss - können abhängig von dem Motordesign (hohe oder geringe Induktanz) entweder Schutzschalter/Sicherungen in den Motorverbindungen installiert werden oder der Motor kann mit einem Teilkurzschluss seinen Betrieb fortsetzen.

Die oben genannten Vorteile a) bis c) können insbesondere durch Reihenschaltung der Wechselrichter erreicht werden. Bei dem erfindungsgemäßen Antriebskonzept lässt sich insbesondere der Vorteil d) erreichen. Bevorzugte Ausgestaltungen mit zusätzlichen Schutzvorrichtungen sind zum Erreichen der Vorteile e) und/oder f) möglich.

Gemäß einer vorteilhaften Ausgestaltung der Erfindung werden Skaleneffekte durch Zusammenschalten gleichartiger Inverter und Motormodule ausgenützt.

Ein wesentlicher Punkt der erfindungsgemäßen Lösung ist die Anwendung in Luftfahrzeugen und eine Erhöhung der Zuverlässigkeit. Dies ist bei den Literaturstellen [1] bis [3] nicht gegeben.

Gemäß vorteilhaften Ausgestaltungen werden Solarpaneele, Brennstoffzellen und/oder Inverter als Spannungsquellen vorgesehen.

Vorteilhafterweise werden Fluktuationen einzelner Spannungsquellen kompensiert. Dies geschieht vorzugsweise über Ausbalancieren von Leistungen einzelner Spannungsquellen. Zum Beispiel könnte es bei Verwendung von Solarpaneelen passieren, dass ein Solarpaneel einseitig in einem Kurvenflug abgeschattet wird und somit nicht mehr die gleiche Leistung wie zuvor bringt.

Bei vorteilhaften Ausgestaltungen der Erfindung ist ein entsprechendes Ausbalancieren ermöglicht.

Vorzugsweise erfolgt eine Maximierung der noch verfügbaren Leistung durch eine Beeinflussung einer Inverter-Modulation und insbesondere durch eine Impedanzanpassung. Bei der in der Literatur [2] beschriebenen Lösung kann die dort dargestellte Inverter-Topologie keine Spannung oberhalb der Quellenspannung erzeugen. Eine Leistungsmaximierung ist daher nicht möglich, wenn der Arbeitspunkt des Antriebes eine Spannung oberhalb der noch verfügbaren Spannung erfordert. Mit den Technologien der Literaturstellen [2] bis [3] kann somit das Problem eines beispielsweise abgeschatteten Solarpaneels allenfalls durch eine sehr unvorteilhafte Systemauslegung adressiert werden.

Weiter ist bei den Literaturstellen [2] und [3] vorgesehen, dass die Sternpunkte der Motormodule verbunden werden. Dies stellt schaltungstechnisch einen groben Fehler dar, da die dort vorgesehenen Inverter/Wechselrichter in Reihe geschaltet sind und die Drehfelder nicht ohne Weiteres synchronisiert werden können. Die Literaturstellen [2] und [3] offenbaren daher keine ausführbare Lösung.

Bei einer bevorzugten Ausgestaltung der Erfindung kann als Untervariante zur Balancierung der Leistung der wenigstens eine Mittenabgriff zwischen den Spannungsquellen und den Invertern auch geöffnet oder moduliert werden. Dies ermöglicht eine Strombegrenzung im Fehlerfall sowie unter anderem eine Entkopplung der ausgefallenen Komponenten im Fehlerfall. Die Gesamtfunktion steht - wenn auch mit reduzierter Leistung - weiterhin zur Verfügung.

Die Literaturstellen [2] und [3] beziehen sich lediglich auf mehrere elektrische Maschinen, die auf eine gemeinsame Welle arbeiten; im Gegensatz hierzu ist die hier beschriebene Lösung auch für den Betrieb mehrerer getrennter Antriebe geeignet. Ausführungsbeispiele der Erfindung werden hiernach anhand der beigefügten Zeichnungen näher erläutert. Darin zeigt:
- Fig. 1: eine Blockdarstellung eines elektrischen Antriebssystems für ein Luftfahrzeug mit in Serie geschalteten Wechselrichtern und einer Ausgleichsschaltung;
- Fig. 2: eine bevorzugte Ausführungsform des elektrischen Antriebssystems für Luftfahrzeuge mit den in Reihe geschalteten Wechselrichtern, der Ausgleichsschaltung und zusätzlichen Stromunterbrechern oder Trennschaltern;
- Fig. 3: ein elektrisches Antriebssystem für Luftfahrzeuge gemäß dem Stand der Technik;
- Fig. 4: ein erstes Anwendungsbeispiel des elektrischen Antriebssystems mit einem mehrphasigen oder modularen Motor für einen Vortrieb eines Luftfahrzeuges;
- Fig. 5: die gleiche Darstellung wie in Fig. 4 mit einer Variation des Motors, ausgebildet als modularer Motor;
- Fig. 6: ein weiteres Ausführungsbeispiel des elektrischen Antriebssystems unter Verwendung von Motoren ohne mechanische Kopplung;
- Fig. 7: eine Blockdarstellung eines weiteren Ausführungsbeispiels des elektrischen Antriebssystems mit zwei modularen elektrischen Maschinen;
- Fig. 8: eine perspektivische Darstellung eines Luftfahrzeuges mit einem Beispiel für eine Anwendung des elektrischen Antriebssystems zum Antreiben von Aggregaten des Luftfahrzeuges, wie z.B. Klimaanlagen oder Hydraulikpumpen; und
- Fig. 9: eine weitere beispielhafte Verwendung des elektrischen Antriebssystems an einem Luftfahrzeug im Bereich der Triebwerke, z.B. als elektrisches Vortriebssystem oder als Anlasser und/oder als Generator.

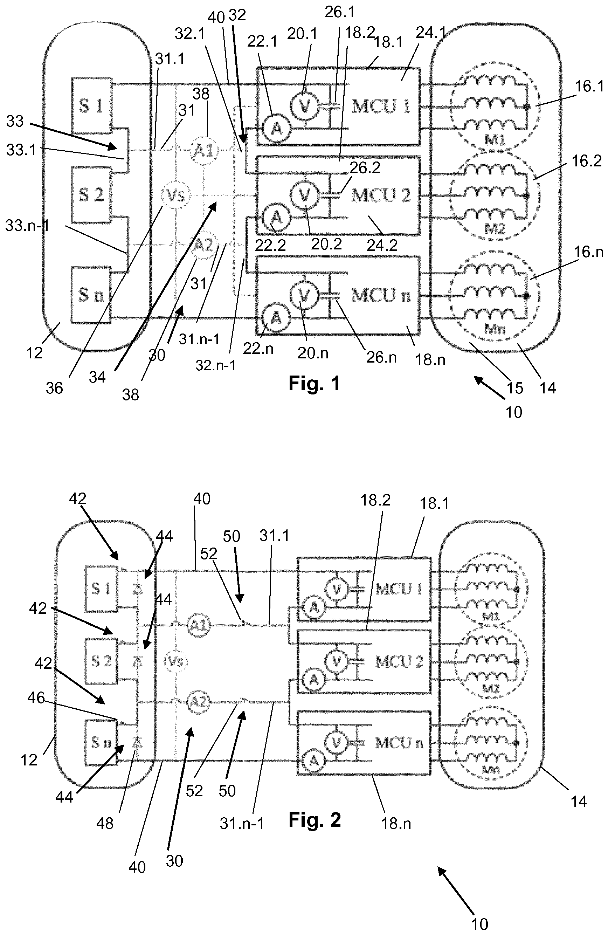

In Fig. 1 ist ein Blockdiagramm einer ersten Ausführungsform eines elektrischen Antriebssystems 10 für ein Luftfahrzeug dargestellt.

Das Antriebssystem 10 weist eine modulare Energiequelle 12 und einen modularen Motor 14 auf. Der modulare Motor 14 ist ein Beispiel für eine modulare elektrische Maschine 15.

Die modulare Energiequelle 12 hat mehrere elektrische Gleichspannungsquellen S1, S2, ..., Sn mit n ≥ 2. In dem dargestellten allgemeinen Blockdiagramm ist eine erste Gleichspannungsquelle S1 und eine zweite Gleichspannungsquelle S2 sowie eine weitere Gleichspannungsquelle Sn dargestellt.

Der modulare Motor weist mehrere Motormodule M1, M2, ..., Mn mit n ≥ 2. Die Motormodule M1, ..., Mn sind Beispiele für elektrische Maschinenmodule 16.1, 16.2, 16.n, die ein Modul der elektrischen Maschine 15 bilden, welche in einer Ausbildung als elektrische Motormodule oder in einem Motormodus elektrische Energie in mechanische Bewegung umwandeln können und in einer Ausbildung als Generatormodule oder in einem Generatormodus mechanische Bewegung in elektrische Energie umsetzen können.

Die Motormodule M1, ..., Mn bzw. die elektrischen Maschinenmodule 16.1, ..., 16.n sind als Mehrphasenmodule mit m-Phasen (m ≥ 2) ausgebildet und werden von zugeordneten elektrischen Gleichspannungsquellen S1, ..., Sn über eine entsprechende Anzahl von Wechselrichtern 18.1, 18.2, ..., 18.n, die die Gleichspannung aus der modularen Energiequelle 12 in Wechselspannung umwandeln (oder umgekehrt im Generatormodus oder Generatorbetrieb, die Wechselspannung aus den elektrischen Maschinenmodulen in Gleichspannung für die modulare Energiequelle 12 umwandeln), mit der modularen Energiequelle 12 verbunden.

Wenigstens sind ein erster Wechselrichter 18.1 und ein zweiter Wechselrichter 18.2 vorgesehen (bei n = 2). Bei weiteren Ausführungsbeispielen ist wenigstens ein weiterer Wechselrichter 18.n (bei n > 2) vorgesehen.

Die Wechselrichter 18.1, 18.2, 18.n sind in Maschinensteuereinheiten MCU1, MCU2, MCUn implementiert.

Die Wechselrichter 18.1, 18.2, 18.n weisen jeweils eine Spannungsmesseinrichtung 20.1, 20.2, 20.n zum Messen der an dem jeweiligen Wechselrichter 18.1, 18.2, 18.n anliegenden Wechselrichter-Gleichspannung V, eine WechselrichterStrommesseinrichtung 22.1, 22.2, 22.n zum Messen des durch den jeweiligen Wechselrichter 18.1, 18.2, 18.n fließenden Wechselrichter-Gleichspannungsstroms A und eine Wechselrichtersteuerung 24.1, 24.2, 24.n sowie zugeordnete Kapazitätselemente, wie beispielsweise ein Kondensator 26.1, 26.2, 26.n, auf. Die Wechselrichtersteuerung 24.1, 24.2, 24.n ist beispielsweise als Software in der jeweiligen Maschinensteuereinheit MCU1, MCU2, MCUn implementiert.

Gemäß der Darstellung in den Fig. 1, 2, 4 bis 7 sind die Wechselrichter 18.1, ..., 18.n in Reihe geschaltet und an die Anschlüsse der modularen Energiequelle 12 angeschlossen.

Wie weiter in diesen Figuren dargestellt, sind die Gleichspannungsquellen S1, ..., Sn der modularen Energiequelle 12 ebenfalls in Reihe geschaltet, um so die Gesamt-Gleichspannung Vs der modularen Energiequelle 12 zur Verfügung zu stellen.

Die Gleichspannungsquellen S1, ..., Sn können gleichartig oder unterschiedlich ausgestaltet sein. Sie können Batterien oder Akkumulatoren, Batteriepakete oder Akkumulatorenpakete, Brennstoffzellen, Photovoltaik-Einrichtungen oder sonstige Einrichtungen zum Umwandeln von Sonnenlicht in elektrische Energie, insbesondere Solarpanele, Solarzellen oder Solarzellenpanele oder beliebige Kombinationen daraus sein.

Weiter ist eine Ausgleichschaltung 30 zum Ausgleichen unterschiedlicher Leistungen der elektrischen Gleichspannungsquellen S1, Sn vorgesehen. Die Ausgleichschaltung 30 weist wenigstens eine Ausgleichsleitung 31 auf, die einerseits an einem Spannungsquellen-Mittelabgriff 33 zwischen zwei Gleichspannungsquellen S1, S2 bzw. S2, Sn und andererseits an einem Wechselrichter-Mittelabgriff 32 zwischen zwei Wechselrichtern 18.1, 18.2 bzw. 18.2, 18.n angreift.

Vorzugsweise sind n-1 Ausgleichsleitungen 31.1, ..., 31.n-1 vorgesehen, die jeweils die Mittelabgriffe 33.1, ..., 33.n-1 zwischen aufeinanderfolgenden Gleichspannungsquellen S1, S2, Sn mit Mittelabgriffen 32.1, ..., 32.n-1 entsprechender aufeinanderfolgender Wechselrichter 18.1, 18.2, 18.n verbinden.

Weiter ist eine Kommunikationseinrichtung 34 vorgesehen, über die Wechselrichtersteuerungen 24.1, 24.2, 24.n in Kommunikationsverbindung stehen, um zumindest die Information über die an den jeweiligen Gleichstromanschlussquellen der jeweiligen Wechselrichter 18.1, 18.2, 18.n anliegende Wechselrichter-Gleichspannung V aus den zugeordneten Gleichspannungsmesseinrichtungen 20.1, 20.2, 20.n austauschen.

Besonders bevorzugt werden über die Kommunikationseinrichtung 34 weitere Informationen über die an der modularen Energiequelle 12 gelieferten Gesamtgleichspannung - gemessen über eine Gesamtgleichspannungsmesseinrichtung 36 sowie Informationen über die über die einzelnen Ausgleichsleitungen 31, 31.1, 31.n-1 fließenden Ströme A1, A2, ..., An-1 ausgetauscht. Hierzu weisen die Mittelwechselrichterabgriffe 32 entsprechende Strommesseinrichtungen 38 auf. Die Kommunikationseinrichtung 34 ist zum Austausch der Spannungswerte und Stromwerte in Echtzeit ausgebildet.

Die vorgeschlagene und in Fig. 1 in allgemeiner Form wiedergegebene elektronische Architektur kann auf jede Art von elektrischer Maschine angewandt werden. Es wird bei den dargestellten Ausführungsbeispielen von Folgendem ausgegangen.

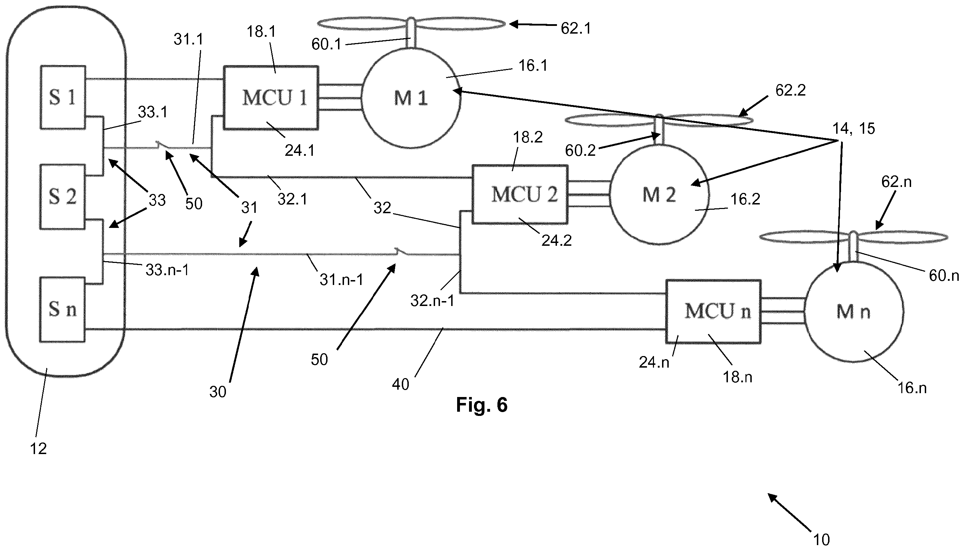

Jedes Maschinenmodul 16.1, ..., 16.n ist von dem anderen Modul magnetisch isoliert oder ist nur einer kleinen magnetischen Wechselwirkung damit unterworfen. Die elektrischen Maschinenmodule 16.1, ..., 16.n können mechanisch gekoppelt sein und somit Teil einer modularen elektrischen Maschine 15, wie beispielsweise Teil des modularen Motors 14, sein. Dies ist beispielsweise in den Fig. 1, 2, 4, 5, 7 und 9 wiedergegeben. Jedoch ist eine derartige mechanische Kopplung für einige Anwendungen nicht notwendig. Derartige Anwendungen ohne mechanische Kopplung sind in Fig. 6 angedeutet. Beispiele für mechanische Lasten ohne mechanische Kopplung sind einige Gebläse in einem verteilten Ventilationssystem oder die elektrischen Triebwerke eines verteilten Elektroluftfahrzeugvortriebssystems. Jedes Motormodul M1, M2, ..., Mn sollte entsprechend der Nennspannung und dem Nennstrom des Wechselrichtermoduls 18.1, ..., 18.n ausgelegt sein. Die Motormodule M1, ..., Mn bzw. allgemein die elektrischen Maschinenmodule 16.1, ..., 16.n können in irgendeiner Art und Weise verteilt sein.

Die Wechselrichter 18.1, ..., 18.n können gemäß unterschiedlicher Gleichstrom-Wechselstrom-Umwandler-Topologien entworfen und/oder implementiert sein. Die Wechselrichter 18.1 können z.B. einfache Inverter, Multilevel-Inverter oder Wechselrichtereinrichtungen mit der Möglichkeit einer Impedanzanpassung oder Impedanzsteuerung unter Verwendung einer zusätzlichen Verstärkerstufe oder auch kombinierte Lösungen sowie Z-Source-Inverter sein. Letztere können insbesondere dann gut brauchbar sein, wenn die Energiequelle 12 in einem breiten und jeweils individuellen Spannungsbereich arbeitet. Dies kann insbesondere bei unterschiedlichen Solarpaneelen der Fall sein, die einer unterschiedlichen Sonnenstrahlungsmenge ausgesetzt sein können. So kann die verbleibende Leistung durch Verstärkung der Spannung auf den erwünschten Wert maximiert werden.

Insbesondere können die Wechselrichtersteuerungen 24.1, ..., 24.n durch die Kommunikationseinrichtung 34 Informationen in Echtzeit austauschen und so Steueraufgaben und insbesondere auch Aufgaben des Managements der modularen Energiequelle 12 übernehmen.

Die Art und Weise, wie die Wechselrichtersteuerungen 24.1, ..., 24.n eventuell mittels einer nicht näher dargestellten Zentralsteuerung oder durch verteilte Steuerungen (nicht dargestellt) gesteuert werden, ergibt sich insbesondere aus der im Folgenden wiedergegebenen Darstellung der Betriebsweise des in Fig. 1 dargestellten elektrischen Antriebssystems 10.

Das Blockdiagramm der Fig. 1 zeigt die Betriebsweise und Konfigurationen, die diese vorgeschlagene Betriebsweise anwenden.

Der modulare Motor 14 ist z.B. ein mehrphasiger Motor, welcher aus den einzelnen Motormodulen M1, ..., Mn mit n ≥ 2 aufgebaut ist. Jedes Motormodul M1, ... Mn ist mehrphasig ausgebildet.

Jeder Wechselrichter 18.1, ..., 18.n erfasst wenigstens seine eigene Wechselrichtergleichspannung V, die über seine Gleichspannungsanschlüsse hinweg anliegt. Stromsensoren - Strommesseinrichtung 38 - zum Messen der Ströme A, A1, A2 sind für Batteriemangementment-Anwendungen brauchbar.

Die Ausgleichsleitungen 31.1, ..., 31.n-1 der Ausgleichschaltung 30 dienen zum Ausbalancieren/Einstellung der Leistung zwischen den einzelnen Modulen S1, ..., Sn der modularen Energiequelle 12. Die entsprechenden Ausgleichsleitungen 31.1, ..., 31.n-1 der Mittelabgriffe 32.1, ..., 32.n-1; 33.1, ..., 33.n-1 haben einen Nennstrom, der auf einen maximalen Differenzstrom ausgelegt ist, welcher weniger als der Nennstrom durch die Versorgungsleitungen 40 zwischen der modularen Energiequelle 12 und dem modularen Motor 14 ist - dies zumindest bei den meisten Anwendungen.

Die Kommunikationseinrichtung 34 verteilt zumindest einige der Spannungszustände zu einigen der Wechselrichtersteuerungen 24.1, ..., 24.n bzw. zwischen einigen der Wechselrichtersteuerungen 24.1, ..., 24.n. Dies erfolgt in Echtzeit.

Als eine Option können (nicht dargestellte) passive Spannungsbegrenzungsvorrichtungen, wie z.B. Varistoren, Ableitwiderstände, Suppressordioden oder dergleichen, an jedem Leistungseingang der Wechselrichter 18.1, ..., 18.n installiert werden, um sicherzustellen, dass an den Wechselrichtern 18.1, ..., 18.n - insbesondere wenn diese als MCU ausgebildet sind - keine Überspannung auftritt, wenn diese passiv sind oder wenn die Energiequelle eingeschaltet wird.

Fig. 2 zeigt eine bevorzugte Ausführungsform des elektrischen Antriebssystems 10, das bis auf die folgenden näher dargelegten Unterschiede dem ersten Ausführungsbeispiel gemäß Fig. 1 entspricht. Die gleichen Elemente des elektrischen Antriebssystems 10 werden mit den gleichen Bezugszeichen wiedergegeben, und deren Beschreibung wird nicht wiederholt.

Zusätzlich zu den oben wiedergegebenen Merkmalen des elektrischen Antriebssystems 10 gemäß der ersten Ausführungsform in Fig. 1 weist bei der zweiten Ausführungsform wenigstens eine der Gleichspannungsquellen S1, ..., Sn eine Spannungsquellenschalteinrichtung 42 zum Abschalten eines Anschlusses der Gleichspannungsquelle bzw. zum Trennen der Gleichspannungsquelle S1, ..., Sn sowie eine Überbrückungseinrichtung 44 zum Überbrücken der Gleichspannungsquelle auf. Beispielsweise ist im Bereich eines Anschlusses der Gleichspannungsquelle ein Trennschalter 46 vorgesehen. Als Beispiel für die Überbrückungseinrichtung 44 ist in Fig. 2 eine Diode 48 gezeigt.

Ein weiterer Unterschied der Ausgestaltung gemäß Fig. 2 zu derjenigen gemäß Fig. 1 liegt darin, dass die wenigstens eine Ausgleichsleitung 31 mit einer Ausgleichsleitungsschalteinrichtung 50 versehen sein kann, mit der die Ausgleichsleitung 31 durchgeschaltet oder unterbrochen werden kann. Auch hier kann ein Schalter, z.B. Halbleiterschalter, Schutzschalter oder Trennschalter 52 vorgesehen sein.

Die Trennschalter 46, 52 sind vorzugsweise durch Signalbetätigung ansteuerbar, um im Rahmen eines Batteriemanagements eine Schaltung bei Vorliegen entsprechender Bedingungen automatisch durchzuführen.

Demnach ist bei besonderen Ausführungsformen, wie beispielsweise in Fig. 2 gezeigt, die Ausgleichschaltung 30 mit zusätzlichen Schaltern oder Trennschaltern 52 versehen, um ein Fortschreiten eines Ausfalls im Falle eines Kurzschlusses in einem der Wechselrichtern 24.1, ..., 24.n zu vermeiden. Dies ist in Fig. 2 sowie in den Beispielen der Fig. 4 und 5 dargestellt. Die Trennschalter 50 müssen in ihrer Nennspannung nur auf die Spannung einer der Spannungsquellen S1, ..., Sn bzw. auf die Spannung nur einer der Wechselrichter 24.1, ..., 24.n und nur auf den Maximalstrom, der durch die zugeordnete Ausgleichsleitung 31 fließen kann, ausgelegt werden, was relativ einfache und kleine Trennschalter 50 erlaubt. Es ist somit die Verwendung von Festkörperschaltern oder Halbleiterschaltern möglich, was eine Modulation mit einer hohen Frequenz ermöglicht.

Wie in Fig. 2 angedeutet, kann die Energiequelle 12 eine oder mehrere Spannungsquellenschalteinrichtungen 42 aufweisen, mit denen ein Kurzschluss oder ein Ausfall wenigstens einer der Spannungsquellen S1, ..., Sn gehandhabt werden kann. Vorzugsweise sind mehrere oder alle der Spannungsquellen S1, ..., Sn mit einer derartigen Spannungsquellenschalteinrichtung 42 versehen.

Die in Fig. 2 angedeuteten Dioden 48 sind ein Beispiel für irgendeine Art von Schaltvorrichtung zum Umgehen oder Überbrücken eines Spannungsquellenmoduls der modularen Energiequelle 12. Demnach ist bei einer bevorzugten Ausgestaltung der modularen Energiequelle wenigstens eine der Spannungsquellen S1-Sn mit einer Schaltvorrichtung zum Umgehen dieser Spannungsquelle S1, ..., Sn im Fall eines Kurzschlusses oder eines Ausfalls derselben versehen.

Bei einem Ausfall einer Spannungsquelle S1, ..., Sn, der zu einem Kurzschluss führt, gibt es die folgenden Optionen:
- Es wird keine Handlung zum Beheben des Ausfalles durchgeführt, und der Strom fließt weiter durch die Spannungsquelle oder die Umgehungsschaltung (z.B. die Diode 48).
- Die Spannungsquellenschalteinrichtung 42 (z.B. Trennschalter 46) wird geöffnet, um die ausgefallene Spannungsquelle S1, ..., Sn zu isolieren.
- Bei einer Ausgestaltung würden beide zuvor genannten Fälle dazu führen, dass das zugeordnete Wechselrichtermodul 18.1, ..., 18.n seinen Betrieb einstellt. Als eine Option kann eine zugeordnete Ausgleichsleitungsschalteinrichtung 50 geöffnet werden, um dem zugeordneten Wechselrichter-Modul 18.1, ..., 18.n eine Fortsetzung seines Betriebs zu ermöglichen.

In weiteren nicht dargestellten Ausgestaltungen sind Trennschalter oder Sicherungen zwischen dem zugeordneten Wechselrichter 18.1, ..., 18.n und dem zugeordneten elektrischen Maschinenmodul 16.1, ..., 16.n vorgesehen. Derartige Sicherungen oder Trennschalter können für einige Motortechnologien oder Motorauslegungen wünschenswert sein. Sie sind beispielsweise nicht erforderlich für Asynchron-Motoren, (geschaltete) Reluktanzmotoren und auch für einige Permanentmagnetmotoren, bei denen die Induktivität der Motorphasen ausreichend ist, den Kurzschlussstrom auf einen Wert unterhalb eines kritischen Werts zu begrenzen.

Wie oben bereits angedeutet, können zentrale oder verteilte Steuerungen (nicht dargestellt) vorgesehen sein.

Wenn bei einer Ausgestaltung gemäß Fig. 2 einer der Wechselrichter 18.1, ..., 18.n in einen Kurzschlusszustand verfällt, können die Ausgleichsleitungschalteinrichtungen 50 bzw. Trennschalter 52 geöffnet werden. Es können dabei einer von mehreren Trennschaltern 52 bzw. eine von mehreren Ausgleichsleitungschalteinrichtungen 50 geöffnet werden, oder es können auch mehrere dieser Ausgleichsleitungschalteinrichtungen 50 bzw. Trennschalter 52 geöffnet werden. In einem solchen Zustand ist dann die Einstellung der Leistung der einzelnen Gleichspannungsquellen S1, ..., Sn nicht mehr möglich. In einem solchen Fall sollten die Gleichspannungsanschluss-Spannungen der jeweiligen Wechselrichter 18.1, ..., 18.n gesteuert bzw. geregelt weden. Da die Spannungswerte wenigstens der Gesamtspannung Vs der modularen Energiequelle 12 oder die Gleichspannungsanschluss-Spannung (Wechselrichter-Gleichspannung V) der einzelnen Wechselrichter 18.1, ..., 18.n bekannt sind, ist es möglich, den Motorstrom oder die Motorleistung durch Anwendung geeigneter Steuerverfahren oder Regelverfahren in den Maschinensteuereinheit MCU1, ..., MCUn bzw. allgemeiner in den Wechselrichter-Steuerungen 24.1, ..., 24.n anzuwenden, um die Spannungswerte in einem Ausgleich zu halten oder auf erwünschten Werten zu halten. Es ist weiterhin möglich, die Leistung zwischen den Wechselrichtern 18.1, ..., 18.n bzw. den elektrischen Maschinenmodulen 16.1, ..., 16.n einzustellen, indem man die Gleichspannungsanschluss-Spannung (Wechselrichtergleichspannung V) auf den erforderlichen Wert regelt bzw. steuert.

Im Folgenden werden anhand der Fig. 3 bis 9 Beispiele zur Verwendung des elektrischen Antriebssystems 10 in oder an Luftfahrzeugen 70 näher erläutert.

Fig. 3 zeigt ein elektrisches Antriebssystem nach dem Stand der Technik für einen redundanten Antrieb, wie z.B. ein Luftfahrzeugvortriebssystem. Es sind mehrere getrennte Motoren M1, ..., Mn jeweils mit eigenem Wechselrichter 18.1, ..., 18.n und eigener Gleichspannungsquelle S1, ...,Sn vorgesehen.

Fig. 4 zeigt, dass die mechanischen Komponenten des Vortriebssystems, wie z.B. Propeller 62 oder Propellergetriebe, z.B. nur einmalig vorgesehen sein können, wenn die Ausfallwahrscheinlich für derartige mechanische Komponenten gering ist. In Fig. 4 ist ein Multiphasenmotor gezeigt, bei dem mehrere Phasen zur Redundanz vorgesehen sind, wobei jede Phase mit einem der Wechselrichter 18.1 - 18.n in der erfindungsgemäßen Konfiguration versehen ist, und weiter auch die modulare Energiequelle 12 in der erfindungsgemäßen Konfiguration angeschlossen ist.

Fig. 5 zeigt eine ganz vergleichbare Ausgestaltung, bei der mehrere Motormodule M1, ..., Mn auf einer Welle 60 arbeiten, um so den modularen Motor 14 zu bilden, der das Vortriebssystem antreibt.

Die Fig. 4 und 5 zeigen demnach ein elektrisches Antriebssystem 10 mit einem Multiphasenmotor und/oder einem modularen Motor 14, mit Maschinensteuereinheiten MCU1, ..., MCUn zum Bilden der Wechselrichter 18.1, ..., 18.n, die in Serie geschaltet sind, der Ausgleichschaltung 30 und der modularen Energiequelle 12 mit Gleichspannungsquellen S1, ..., Sn in Reihenschaltung. Die Motorphasen bzw. Motormodule M1, ..., Mn können in irgendeiner Weise angeordnet werden, und zwar mit oder ohne magnetischer Kopplung. Bei den Ausführungsformen der Fig. 4 und 5 sind die elektrischen Maschinenmodule 16.1, ..., 16.n mechanisch gekoppelt, z.B. durch eine Verbindung mit der gleichen Welle.

Fig. 5 zeigt ein weiteres Anwendungsbeispiel, wobei die Motormodule M1, M2, Mn als getrennte elektrische Maschinen ausgeführt sind, die durch zugeordnete Wechselrichter 18.1, ..., 18.n in Reihenverbindung mit Energie versorgt werden, wobei die Ausgleichschaltung 30 - hier mit Ausgleichsleitungschalteinrichtung 50 und die modulare Energiequelle 12 vorgesehen ist. Die elektrischen Maschinenmodule 16.1, ..., 16.n können vollständig getrennt ausgeführt sein - beispielsweise wie dargestellt mit eigenen Wellen 60.1, ..., 60.n und einer eigenen Vortriebseinrichtung 62.1, ..., 62.n, wie z.B. einem Propeller 62; sie könnten auch mechanisch gekoppelt sein.

Wie in Fig. 6 angedeutet, können zusätzlich zu der erfindungsgemäßen Reihenschaltung mehrerer der Wechselrichter 18.1, 18.2, 18.n auch einige der Wechselrichter parallel geschaltet sein. Hier sind zwei modulare Motoren 14.1 und 14.2 jeweils mit mehreren Motormodulen M.1.1, ..., M.1.n; M.2.1, ..., M.2.n vorgesehen, die jeweils durch Maschinensteuereinheiten MCU1.1, ..., MCU1.n; MCU2.1, ..., MCU2.n versorgt werden, wobei in dem dargestellten Ausführungsbeispiel jeweils Paare von Wechselrichtern MCU1.1, MCU2.1, ..., MCU1.n, MCU2.n parallel mittels der Ausgleichsleitungen 31 an jeweils eine entsprechende Gleichspannungsquelle S1, ..., Sn angeschlossen sind. Fig. 6 ergibt sich beispielsweise aus der Ausführungsform von Fig. 5, indem noch ein weiterer modularer Motor 14.2 mit entsprechender Schaltung an die modulare Energiequelle angeschlossen ist.

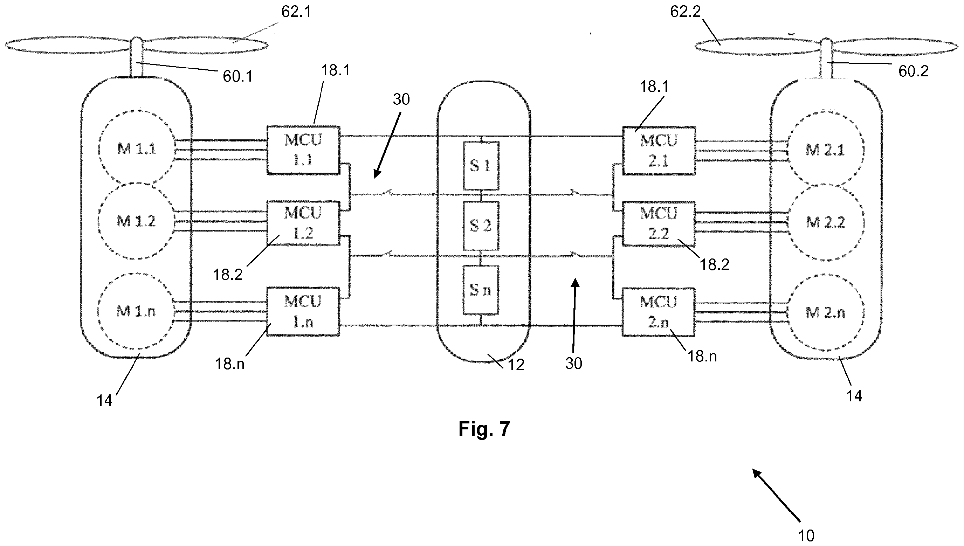

Fig. 7 zeigt somit ein Antriebssystem 10 mit zwei modularen Maschinen 14.1, 14.2, jeweils zwei n Maschinensteuereinheiten MCU1.1, ..., MCU1.n; MCU2.1, ..., MCU2.n in elektrischer Reihen- und Parallelschaltung mit Ausgleichschaltung 30 und modularer Energiequelle 12 in Reihenschaltung.

Bisher ist das elektrische Antriebssystem 10 am Beispiel einer Verwendung zum Antreiben eines Vortriebs eines Luftfahrzeuges 70 beschrieben worden. Ein konkretes praktisches Beispiel ergibt sich durch die Anwendung der hier beschriebenen Schaltungen auf das Antriebssystem des Flugzeugs Airbus E-Fan, wie eingangs erläutert.

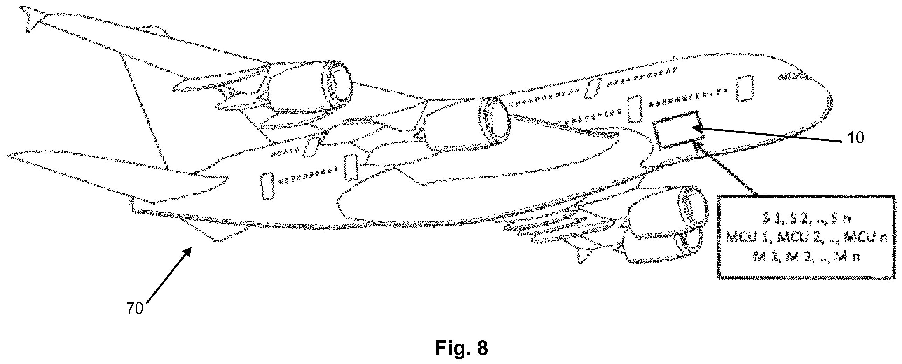

Wie in Fig. 8 angedeutet, kann das Antriebssystem 10 aber auch zum Antreiben anderer Aggregate, wie z.B. von Klimaaggregaten oder von Hydraulikpumpen, oder von sonstigen - auch sicherheitsrelevanten - Nebenaggregaten in einem Luftfahrzeug 70 angewandt werden. Fig. 8 zeigt demnach ein Luftfahrzeug 70 mit einem oder mehreren der hier vorgeschlagenen elektrischen Antriebssysteme 10.

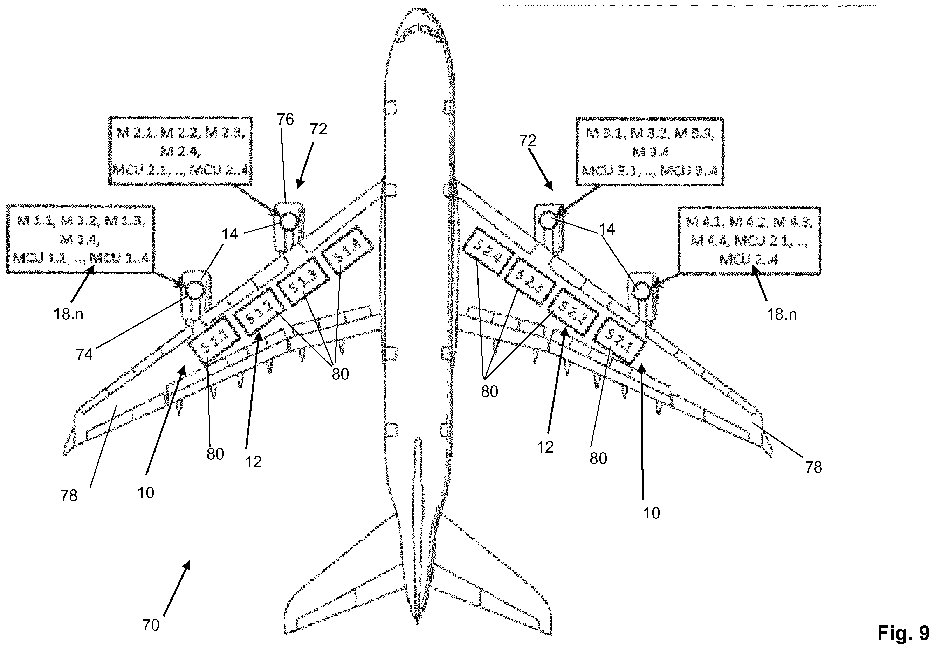

Fig. 9 zeigt ein Luftfahrzeug 70 mit einem elektrischen Vortriebssystem 72 als ein weiteres Beispiel einer Verwendung des elektrischen Antriebssystems 10 oder ein Luftfahrzeug 70, bei dem Anlasser 74 oder Generatoren als das elektrische Antriebssystem 10 ausgebildet sind. Jedes Triebwerk 76 kann eine oder mehrere modulare Maschinen 15 enthalten. Jedes Spannungsquellenmodul S1, ..., Sn kann an eine oder mehrere der Wechselrichter 18.1, ..., 18.n angeschlossen sein. Zum Beispiel kann ein in einem der Flügel 78 ausgebildetes Antriebssystem 10 die in Fig. 7 dargestellte Konfiguration haben. In diesem Fall gibt es an jedem der Tragflügel 78 jeweils ein elektrisches Antriebssystem 10 mit der in Fig. 7 angedeuteten Konfiguration. Beispielsweise ist auf dem Flügel 78 eine Mehrzahl von Solarpaneelen 80 vorgesehen, die einzelne der Gleichspannungsquellen S1, ..., Sn bilden. In dem Beispiel von Fig. 9 ist n = 4.

Zuvorstehend ist eine neue Architektur für ein elektrisches Antriebssystem 10 beschrieben worden, mit dem sich unter Verringerung des Gewichts und der Komplexität die Redundanz für Anwendungen in Luftfahrzeugen 70 verringern lässt. Bisher ist - wie dies in Fig. 3 dargestellt worden ist - zum Schaffen der Redundanz beispielsweise ein System mit drei oder vier Motoren vorgesehen worden. Da man sich nicht nur auf einen der Motoren verlassen will, sieht man dann eine entsprechende Anzahl von Getrieben, von Vortriebseinrichtungen, wie beispielsweise Propeller 62, und eine entsprechende Anzahl an Leistungselektronik vor. Dies führt zwar zu einer hohen Redundanz, jedoch auch zu einem großen Gewicht und hohen Kosten. Bei unterschiedlichen Ausgestaltungen der Erfindung wird ein modularer Motor 14 oder allgemeiner eine modulare elektrische Maschine 15 entwickelt, wobei der Motor 14 oder die Maschine 15 entweder mehrere Phasen hat - d.h. mehrere Phasen oder Motormodule sind auf denselben Kern gewickelt - oder es werden als Motormodule M1, ..., Mn mehrere Motoren vorgesehen, die auf einer Welle 60 zusammengefasst sind. Eine solche Konfiguration ist insbesondere dort vorteilhaft, wo die Ausfallwahrscheinlichkeit von mechanischen Komponenten, wie Wellen 60, oder mechanischen Vortriebseinrichtungen, wie Propeller 62, gering ist, jedoch eine höhere Ausfallwahrscheinlichkeit für den Elektromotor oder dessen Ansteuerung vorliegt.

Bei dem hier vorgeschlagenen elektrischen Antriebssystem 10 werden insbesondere Module von Wechselrichtern 18.1, ..., 18.n vorgeschlagen, die in Reihe geschaltet sind.

Weiter wird auch eine Redundanz auf Seiten der Energiequelle vorgesehen, indem eine modulare Energiequelle 12 geschaffen wird, die einzelne Module in Form von mehreren Gleichspannungsquellen S1, ..., Sn vorsieht. Diese Gleichspannungsquellen S1, ..., Sn können z.B. Solarpanele 80 oder andere Einrichtungen zum Umwandeln von Sonnenenergie oder Strahlungsenergie in elektrische Energie sein, Batterien bzw. Akkumulatoren oder Brennstoffzellen oder dergleichen. Solarzellen oder Brennstoffzellen haben heute das Problem, dass die Art und Weise, wie sie die Energie abgeben, fluktuieren kann. Bei einer Brennstoffzelle kann es z.B. sein, dass die Reaktionspartner nicht schnell genug zur Verfügung stehen, sodass man über die Zeit hinweg keine konstante Leistungsabgabe erreicht. Daher wird in der Regel bei bisher bekannten Systemen ein Batteriemangement-System zum Ausbalancieren bzw. Einstellen der Leistungen der einzelnen Gleichspannungsquellen benötigt. Dies geschieht bei der erfindungsgemäßen Konfiguration auf geschickte Art und Weise.

Mit der Gesamtkonfiguration des elektrischen Antriebssystems in der beschriebenen Ausgestaltung kann man die Leistung der modularen Energiequelle 12, die jeweils zur Verfügung steht, auch bei unregelmäßig arbeitender Brennstoffzelle oder bei teilweise Abschattung von Solarzellen oder dergleichen, maximieren. Insbesondere geschieht dies durch Anpassung des Arbeitspunktes an die jeweilige Energiequelle. Man kann die Leistung maximieren, wenn man die Impedanzen entsprechend anpasst. Entsprechend kann man durch die Anordnung der matrixförmigen Inverter und entsprechender Ansteuerung der Wechselrichter mittels der Wechselrichtersteuerungen 24.1, ..., 24.n entsprechende Fluktuationen in der modularen Energiequelle 12 kompensieren. Damit liegt auch die Gesamtleistung deutlich über derjenigen Leistung, die bei einer anderen Konfiguration, beispielsweise derjenigen von Fig. 3, erreicht werden kann. Bei der Konfiguration von Fig. 3 würde dann, wenn eine Brennstoffzelle nur 50% ihrer Leistung abgibt und diese direkt an den entsprechenden Motor gekoppelt ist, auch der Motor nur noch 50% seiner Leistung bringen. Schaltet man aber sowohl die Energiequelle als auch die Wechselrichter in Reihe und sieht die Ausgleichschaltung 30 mit entsprechender Steuerung vor, dann verliert man bei einem Abfall einer der Gleichspannungsquellen auf 50% ihrer sonstigen Leistung nur einen relativ geringen Anteil an der Gesamtleistung.

Bei den dargestellten Ausführungsbeispielen sind Maschinensteuereinheiten MCU dargestellt, die im Wesentlichen Inverter oder die Leistungselektronik zu einem zugeordneten elektrischen Maschinenmodul 16.1 bilden. Alle diese Maschinensteuereinheiten haben in irgendeiner Form einen Zwischenkreiskondensator 26.1, ..., 26.n, an dem sich eine gewisse Spannung V einstellt, die mit einer Gleichspannungsmesseinrichtung 20.1, ..., 20.n erfasst wird. Weiter gibt es Ausgleichsleitungen 31, die Strommesseinrichtungen 38 aufweisen. Auch in den einzelnen Maschinensteuereinheiten sind Strommesseinrichtungen - hier Wechselrichterstrommesseinrichtungen 22.1, ..., 22.n genannt - vorgesehen. Wenn jetzt der Strom, den alle Inverter aufnehmen, überall gleich ist, geht durch die Ausgleichsleitung bzw. die Ausgleichsleitungen 31 kein Strom hindurch. Wenn die Gleichspannungsquellen S1, ..., Sn Quellen mit unterschiedlicher Leistung sind, die Fluktuationen in ihrer Leistung aufweisen, dann können diese einzelnen Spannungsquellen unterschiedlich belastet werden, indem man Differenzstrom durch die Ausgleichsleitungen 31 fließen lässt.

Die entsprechenden Steuerungs- oder Regelungsvorrichtungen können dezentral in Steuerungen - insbesondere in den Wechselrichtersteuerungen, z.B. als Software, implementiert sein oder in einer (nicht dargestellten) zentralen Steuerung untergebracht sein. Auch die Wechselrichtersteuerungen 24.1, ..., 24.n können in den einzelnen MCU1, ..., MCUn implementiert sein oder in einer nicht dargestellten zentralen Steuerung, die entsprechend mit den Wechselrichtern 18.1, ..., 18.n in Verbindung steht.

Als modularer Motor 14 bzw. allgemein als modulare elektrische Maschine 15 kann ein sogenannter Multiphasenmotor vorgesehen sein. Beispielsweise hat ein üblicher Drehstrommotor ein Phasensystem à drei Phasen. Bei einem modularen Motor 14 mit n = 2 würden zwei solcher Dreiphasensysteme vorgesehen, die alle auf den gleichen Kern gewickelt werden. So hätte man eine Redundanz elektrisch realisiert, durch Wicklung mehrerer Phasensysteme auf den gleichen Kern.

Bei der in Fig. 5 angedeuteten Ausgestaltung arbeiten mehrere Elektromotoren auf der gleichen Welle 60. Anstelle eines Arbeitens auf einer Welle 60 können die unterschiedlichen Motoren auch in einem Getriebe zusammengeführt sein.

Das elektrische Antriebssystem 10 kann zum Vortrieb von Flugzeugen verwendet werden. Bei einer Variante kann das elektrische Antriebssystem als Starter und/oder als Generator - Anlasser/Generator 74 - für die Triebwerke 76 verwendet werden, die ansonsten auch konventionell aufgebaut sein können. Bei einer weiteren Variante kann das elektrische Antriebssystem 10 zum Antreiben eines Klimasystems verwendet werden.

Ein Trend in der Forschung zu Luftfahrzeugen geht dahin, dass immer mehr Antriebsleistung in einem Luftfahrzeug 70 - wie z.B. Hilfsantriebe - elektrisch realisiert werden. Das elektrische Antriebssystem 10 kann ebenfalls für derartige Hilfsantriebe verwendet werden. Eine andere Anwendung ist beispielsweise als Antrieb einer Hydraulikpumpe. Bisher werden an Luftfahrzeugen 70 jeweils mehrere Hydraulikpumpen vorgesehen, um den Erfordernissen der Redundanz Rechnung zu tragen. Anstelle des Vorsehens mehrerer Hydraulikpumpen könnte eine Pumpe mit dem elektrischen Antriebssystem 10 gemäß einer Ausführungsform der Erfindung angetrieben werden. Auch hier kann die Ausfallwahrscheinlichkeit der mechanischen Bauelemente der Pumpe viel geringer als diejenige der Motorbereiche sein; entsprechend kann auch hier erheblich Gewicht eingespart werden.

Bei den unterschiedlichen Ausführungsbeispielen sind jeweils Maschinen mit sternverschalteten Phasen dargestellt. Darauf sind die hier beschriebene Ideen jedoch nicht beschränkt. Diese funktionieren genauso z.B. mit Maschinen in Dreieckschaltung. Bei mehr als drei Phasen sind auch andere Verschaltungen oder Mischformen möglich.

Bei Anwendungen als Anlasser oder Generator sind auch beide Funktionen durch die gleiche Maschine möglich.

### Bezugszeichenliste:

- 10: elektrisches Antriebssystem
- 12: modulare Energiequelle
- 14: modularer Motor
- 15: modulare elektrische Maschine
- 16.1: erstes elektrisches Maschinenmodul
- 16.2: zweites elektrisches Maschinenmodul
- 16.n: weiteres elektrisches Maschninenmodul
- 18.1: erster Wechselrichter
- 18.2: zweiter Wechselrichter
- 18.n: weiterer Wechselrichter
- 20.1: erste Gleichspannungsmesseinrichtung
- 20.2: zweite Gleichspannungsmesseinrichtung
- 20.n: weitere Gleichspannungsmesseinrichtung
- 22.1: erste Wechselrichterstrommesseinrichtung
- 22.2: zweite Wechselrichterstrommesseinrichtung
- 22.n: weitere Wechselrichterstrommesseinrichtung
- 24.1: erste Wechselrichtersteuerung
- 24.2: zweite Wechelrichtersteuerung
- 24.n: weitere Wechselrichtersteuerung
- 26.1: erster Kondensator
- 26.2: zweiter Kondensator
- 26.n: weitere Kondensator
- 30: Ausgleichsschaltung
- 31: Ausgleichsleitung
- 31.1: erste Anschlussleitung
- 31.n-1: weitere Anschlussleitung
- 32: Wechselrichter-Mittelabgriff
- 32.1: erster Wechselrichter-Mittelabgriff
- 32.n-1: weiterer Wechselrichter-Mittelabgriff
- 33: Spannungsquellen-Mittelabgriff
- 33.1: erster Spannungsquellen-Mittelabgriff
- 33.n-1: weiterer Spannungsquellen-Mittelabgriff
- 34: Kommunikationseinrichtung
- 36: Gesamtgleichsspannungsmesseinrichtung
- 38: Strommesseinrichtung (Ausgleichsleitung)
- 40: Versorgungsleitung
- 42: Spannungsquellenschalteinrichtung
- 44: Überbrückungseinrichtung
- 46: Trennschalter
- 48: Diode
- 50: Ausgleichsleitungsschalteinrichtung
- 52: Trennschalter
- 60: Welle
- 60.1: erste Welle
- 60.n: weitere Welle
- 62: Propeller
- 62.1: erste mechanische Vortriebseinrichtung
- 62.n: weitere mechanische Vortriebseinrichtung
- 70: Luftfahrzeug
- 72: Vortriebsystem
- 74: Anlasser
- 76: Triebwerk
- 78: Flügel
- 80: Solarpanel
- A: Wechselrichter-Gleichspannungsstrom
- A1: Ausgleichsstrom
- A2: Ausgleichsstrom
- S1: erste Gleichspannungsquelle
- S2: zweite Gleichspannungsquelle
- Sn: weitere Gleichspannungsquelle
- M1: erste Motormodul
- M2: zweites Motormodul
- Mn: weiteres Motormodul
- MCU1: erste Maschinensteuereinheit
- MCU2: zweite Maschinensteuereinheit
- MCUn: weitere Maschinensteuereinheit
- V: Wechselrichter-Gleichspannung
- Vs: Gesamtgleichspannung

## Patentansprüche

1. Elektrisches Antriebssystem (10) für ein Luftfahrzeug (70), umfassend wenigstens eine erste und eine zweite elektrische Gleichspannungsquelle (S1, S2) zum Liefern einer Gleichspannung, ein erstes elektrisches Maschinenmodul (16.1) und ein zweites elektrisches Maschinenmodul (16.2), die dazu ausgebildet sind, elektrische Wechselspannung in mechanische Bewegung umzuwandeln und/oder mechanische Bewegung in elektrische Wechselspannung umzuwandeln, wobei
das erste elektrische Maschinenmodul (16.1) mit einem ersten Wechselrichter (18.1) verbunden ist und das zweite elektrische Maschinenmodul (16.2) mit einem zweiten Wechselrichter (18.2) verbunden ist, wobei der erste und der zweite Wechselrichter (18.1, 18.2) in Reihe geschaltet sind, und
die erste und die zweite Gleichspannungsquelle (S1, S2) in Reihe geschaltet sind, um eine Gesamtgleichspannung (Vs) zu erzeugen, an die die in Reihe geschalteten Wechselrichter (18.1, 18.2, 18.n) angeschlossen sind,
wobei die Wechselrichter (18.1, 18.2, 18.n) jeweils eine Spannungsmesseinrichtung (36) zum Messen der an dem jeweiligen Wechselrichter (18.1, 18.2, 18.n) anliegenden Wechselrichter-Gleichspannung und eine Wechselrichtersteuerung (24.1, 24.2, 24.n) zum Steuern des Betriebs der Wechselrichter in Abhängigkeit von der Wechselrichter-Gleichspannung aufweisen,
wobei der erste und der zweite Wechselrichter (18.1, 18.2) mittels einer eigenen, einen Wechselrichter-Mittelabgriff (32) aufweisenden Wechselrichterverbindungsleitung in Reihe geschaltet sind,
wobei eine Ausgleichsleitung (31) zwischen einem Spannungsquellenmittelabgriff (33) zwischen der ersten und der zweiten Spannungsquelle (S1, S2) und dem Wechselrichter-Mittelabgriff (32) zwischen dem ersten und dem zweiten Wechselrichter (18.1, 18.2) vorgesehen **gekennzeichnet dadurch, dass** die erste und die zweite Wechselrichtersteuerung (24.1, 24.2) mittels einer Kommunikationseinrichtung (34) kommunikativ verbunden sind, um zumindest eine Information über die gemessenen Wechselrichter-Gleichspannungen (V) in Echtzeit auszutauschen,
wobei eine Ausgleichstrommesseinrichtung (38) zum Messen des durch die Ausgleichsleitung (31) fließenden Ausgleichstroms (A1, A2) vorgesehen ist,
und eine Information über den gemessenen Ausgleichsstrom (A1, A2) über die Kommunikationseinrichtung (34) an wenigstens eine der Wechselrichtersteuerungen (24.1, 24.2, 24.n) übertragbar ist,
um die Wechselrichter (18.1, 18.2) in Abhängigkeit von dem gemessenen Ausgleichsstrom (A1, A2) und der Wechselrichter-Gleichspannung zu steuern.

2. Elektrisches Antriebssystem (10) nach Anspruch 1, **dadurch**
**gekennzeichnet,**
**dass** wenigstens einer der Wechselrichter (18.1, 18.2, 18.n) eine Wechselrichterstrommesseinrichtung (22.1, 22.2, 22.n) zum Messen des durch den Wechselrichter (18.1, 18.2, 18n) fließenden Wechselrichter-Gleichspannungsstroms (A) aufweist, wobei eine Information über den gemessenen Wechselrichter-Gleichspannungsstrom (A) über die Kommunikationseinrichtung (34) in Echtzeit übertragbar ist.

3. Elektrisches Antriebssystem (10) nach Anspruch 1 oder 2, **dadurch**
**gekennzeichnet,**
**dass** der erste und/oder der zweite Wechselrichter (18.1, 18.2, 18.n) in einer Maschinensteuereinheit (MCU1, MCU2, MCUn) implementiert ist.

4. Elektrisches Antriebssystem (10) nach einem der voranstehenden Ansprüche, **dadurch gekennzeichnet,**
**dass** die erste und die zweite Wechselrichtersteuerung (24.1, 24.2) dazu ausgebildet sind, die Leistungen zwischen der ersten und der zweiten Gleichspannungsquelle (S1, S2) auszugleichen und/oder einzustellen.

5. Elektrisches Antriebssystem (10) nach einem der voranstehenden Ansprüche, **gekennzeichnet durch**
wenigstens eine oder mehrere weitere Gleichsspannungsquellen (S1, S2, Sn), die mit der ersten und der zweiten Gleichspannungsquelle (S1, S2) in Reihe geschaltet sind, um die Gesamtgleichspannung zu erzeugen, und/oder
durch wenigstens eine oder mehrere weitere elektrische Maschinenmodule (16.1, 16.2, 16n) mit jeweils einem weiteren Wechselrichter (18.1, 18.2, 18.n), wobei der oder die weiteren Wechselrichter (18.1, 18.2, 18n) mit dem ersten und zweiten Wechselrichter (18.1, 18.2) in Reihe geschaltet sind und ebenfalls eine weitere Wechselrichtergleichspannungsmesseinrichtung (20.1, 20.2, 20.n) und eine weitere Wechselrichtersteuerung (24.n) aufweisen, die mit der Kommunikationseinrichtung (34) verbunden sind.

6. Elektrisches Antriebssystem (10) nach einem der voranstehenden Ansprüche, **dadurch gekennzeichnet,**
**dass** die erste und/oder die zweite Gleichspannungsquelle (S1, S2) mit einer Spannungsquellenschalteinrichtung (42) zum Abschalten eines Anschlusses der Gleichspannungsquelle (S1, S2, Sn) und mit einer Überbrückungseinrichtung (44) zur Überbrückung der abgeschalteten Gleichspannungsquelle (S1, S2, Sn) versehen sind.

7. Elektrisches Antriebssystem (10) nach einem der voranstehenden Ansprüche, **dadurch gekennzeichnet,**
**dass** die Ausgleichsleitung (31) mit einer Ausgleichsleitungsschalteinrichtung (50) versehen ist, mit der die Ausgleichsleitung (31) unterbrochen oder verbunden werden kann.

8. Elektrisches Antriebssystem (10) nach einem der voranstehenden Ansprüche, **dadurch gekennzeichnet,**
**dass** die elektrischen Maschinenmodule (16.1, 16.2, 16.n) Motormodule (M1, M2, Mn) zum Antreiben eines Vortriebs für ein Luftfahrzeug (70) und/oder zum Antreiben von Nebenaggregaten eines Luftfahrzeugs (70) sind.

9. Elektrisches Antriebssystem (10) nach einem der voranstehenden Ansprüche, **dadurch gekennzeichnet,**
**dass** die erste und die zweite Gleichspannungsquelle (S1, S2) ausgewählt sind aus der Gruppe von Gleichspannungsquellen (S1, S2, Sn), die eine Batterie, ein Batteriepack, einen Akkumulator, ein Akkumulatorpack, eine Brennstoffzelle, eine Brennstoffzellengruppe, eine Solarzelle und ein Solarzellenpack umfasst.

10. Luftfahrzeug (70), umfassend ein elektrisches Antriebssystem (10) nach einem der voranstehenden Ansprüche.

## Claims

1. Electrical propulsion system (10) for an aircraft (70), comprising at least a first and a second electrical DC voltage source (S1, S2) for supplying a DC voltage, a first electrical machine module (16.1) and a second electrical machine module (16.2), which are designed to convert electrical AC voltage into mechanical motion and/or to convert mechanical motion into electrical AC voltage, the first electrical machine module (16.1) being connected to a first inverter (18.1) and the second electrical machine module (16. 2) is connected to a second inverter (18.2), wherein the first and the second inverter (18.1, 18.2) are connected in series, and the first and the second DC voltage source (S1, S2) are connected in series to produce a total DC voltage (Vs) to which the series-connected inverters (18.1, 18.2, 18.n) are connected, wherein the inverters (18.1, 18.2, 18.n) each comprise a voltage measuring device (36) for measuring the inverter DC voltage applied to the respective inverter (18.1, 18.2, 18.n) and an inverter control (24.1, 24.2, 24.n). n) for controlling the operation of the inverters as a function of the inverter DC voltage, wherein the first and second inverters (18.1, 18.2) are connected in series by means of their own inverter connecting line having an inverter centre tap (32), wherein a compensating line (31) is provided between a voltage source centre tap (33) between the first and the second voltage source (S1, S2) and the inverter centre tap (32) between the first and the second inverter (18.1, 18.2), **characterised in that** the first and the second inverter control (24.1, 24.2) are communicatively connected by means of a communication device (34) in order to exchange at least one item of information about the measured inverter DC voltages (V) in real time, wherein a compensating current measuring device (38) is provided for measuring the compensating current (A1, A2) flowing through the compensating line (31), and information about the measured compensating current (A1, A2) is sent via the communication device (34) to at least one of the inverter controllers (24.1, 24.2, 24.n) in order to control the inverters (18.1, 18.2) as a function of the measured compensating current (A1, A2) and the inverter DC voltage.

2. Electrical propulsion system (10) according to claim 1, **characterized in that** at least one of the inverters (18.1, 18.2, 18.n) has an inverter current measuring device (22.1, 22.2, 22.n) for measuring the inverter direct voltage current (A) flowing through the inverter (18.1, 18.2, 18.n), wherein an information about the measured inverter direct voltage current (A) can be transmitted in real time via the communication device (34).

3. Electrical propulsion system (10) according to claim 1 or 2, **characterized in that** the first and/or the second inverter (18.1, 18.2, 18.n) is/are implemented in a machine control unit (MCU1, MCU2, MCUn).

4. Electrical propulsion system (10) according to one of the above claims, **characterized in that** the first and the second inverter control unit (24.1, 24.2) are adapted to equalize and/or adjust the powers between the first and the second DC voltage source (S1, S2).

5. Electrical propulsion system (10) according to one of the above claims, **characterized by** at least one or more further DC voltage sources (S1, S2, Sn) connected in series with the first and second DC voltage sources (S1, S2) to produce the total DC voltage, and/or by at least one or more further electrical machine modules (16.1, 16.2, 16n) each having a further inverter (18.1, 18.2, 18.n), wherein the further inverter or inverters (18.1, 18.2, 18n) are connected in series with the first and second inverters (18.1, 18.2) and likewise have a further inverter direct voltage measuring device (20.1, 20.2, 20.n) and a further inverter control (24.n) which are connected to the communication device (34).

6. Electrical propulsion system (10) according to one of the above claims, **characterized in that** the first and/or the second DC voltage source (S1, S2) are provided with a voltage source switching device (42) for switching off a connection of the DC voltage source (S1, S2, Sn) and with a bridging device (44) for bridging the switched-off DC voltage source (S1, S2, Sn).

7. Electrical propulsion system (10) according to one of the above claims, **characterized in that** the compensating line (31) is provided with a compensating line switching device (50) with which the compensating line (31) is switched on and off.

8. Electrical propulsion system (10) according to one of the above claims, **characterized in that** the electrical machine modules (16.1, 16.2, 16.n) are motor modules (M1, M2, Mn) for driving propulsion for an aircraft (70) and/or for driving auxiliary units of an aircraft (70).

9. Electrical propulsion system (10) according to one of the above claims, **characterized in that** the first and second DC voltage sources (S1, S2) are selected from the group of DC voltage sources (S1, S2, Sn) comprising a battery, battery pack, accumulator, accumulator pack, fuel cell, fuel cell group, solar cell and solar cell pack.

10. Aircraft (70) comprising an electrical propulsion system (10) according to one of the above claims.

## Revendications

1. Système de propulsion électrique (10) pour un avion (70), comprenant au moins une première et une deuxième source de tension électrique continue (S1, S2) pour fournir une tension continue, un premier module de machine électrique (16.1) et un deuxième module de machine électrique (16.2), qui sont conçus pour convertir une tension électrique alternative en un mouvement mécanique et/ou pour convertir un mouvement mécanique en une tension électrique alternative, le premier module de machine électrique (16.1) étant connecté à un premier onduleur (18.1) et le deuxième module de machine électrique (16. 2) est connecté à un second onduleur (18.2), dans lequel le premier et le second onduleur (18.1, 18.2) sont connectés en série, et la première et la seconde source de tension continue (S1, S2) sont connectées en série pour produire une tension continue totale (Vs) à laquelle les onduleurs connectés en série (18.1, 18.2, 18.n) sont connectés, les onduleurs (18.1, 18.2, 18.n) comprenant chacun un dispositif de mesure de la tension (36) pour mesurer la tension continue de l'onduleur appliquée à l'onduleur respectif (18.1, 18.2, 18.n) et une commande d'onduleur (24.1, 24.2, 24.n) pour contrôler le fonctionnement des onduleurs en fonction de la tension continue de l'onduleur, dans lequel les premier et deuxième onduleurs (18.1, 18.2) ont une commande d'onduleur (24.1, 24.2, 24. 2) sont branchés en série au moyen d'une ligne de raccordement d'onduleur propre avec un point de prise centrale d'onduleur (32), une ligne de compensation (31) étant prévue entre un point de prise centrale de source de tension (33) entre la première et la deuxième source de tension (S1, S2) et le point de prise centrale d'onduleur (32) entre le premier et le deuxième onduleur (18.1, 18.2), **caractérisé en ce que** la première et la deuxième commande d'onduleur (24.1, 24.2, 24.n) sont reliés de manière communicative au moyen d'un dispositif de communication (34) afin d'échanger en temps réel au moins une information sur les tensions continues (V) mesurées de l'onduleur, un dispositif de mesure du courant de compensation (38) étant prévu pour mesurer le courant de compensation (A1, A2) passant par la ligne de compensation (31), et des informations sur le courant de compensation mesuré (A1, A2) étant envoyées par le dispositif de communication (34) à au moins un des régulateurs de l'onduleur (24.1, 24.2, 24.n) afin de commander les onduleurs (18.1, 18.2) en fonction du courant de compensation mesuré (A1, A2) et de la tension continue de l'onduleur.

2. Système de propulsion électrique (10) selon la revendication 1, **caractérisé en ce qu'**au moins l'un des onduleurs (18.1, 18.2, 18.n) présente un dispositif de mesure du courant d'onduleur (22.1, 22.2, 22.n) pour mesurer le courant continu d'onduleur (A) circulant dans l'onduleur (18.1, 18.2, 18.n), des informations sur le courant continu d'onduleur (A) mesuré pouvant être transmises en temps réel par le dispositif de communication (34).

3. Système de propulsion électrique (10) selon la revendication 1 ou 2, **caractérisé en ce que** le premier et/ou le deuxième onduleur (18.1, 18.2, 18.n) est/sont mis en oeuvre dans une unité de commande de machine (MCU1, MCU2, MCUn).

4. Système de propulsion électrique (10) selon l'une des revendications ci-dessus, **caractérisé en ce que** la première et la deuxième unité de commande de l'onduleur (24.1, 24.2) sont adaptées pour égaliser et/ou ajuster les puissances entre la première et la deuxième source de tension continue (S1, S2).

5. Système de propulsion électrique (10) selon l'une des revendications ci-dessus, **caractérisé par** au moins une ou plusieurs autres sources de tension continue (S1, S2, Sn) connectées en série avec les première et deuxième sources de tension continue (S1, S2) pour produire la tension continue totale, et/ou par au moins un ou plusieurs autres modules de machine électrique (16.1, 16.2). 2, 16n) comportant chacun un autre onduleur (18.1, 18.2, 18.n), le ou les autres onduleurs (18.1, 18.2, 18n) étant montés en série avec le premier et le deuxième onduleur (18.1, 18.2) et comportant également un autre dispositif de mesure de la tension continue de l'onduleur (20.1, 20.2, 20.n) et une autre commande d'onduleur (24.n) qui sont reliés au dispositif de communication (34).

6. Système de propulsion électrique (10) selon l'une quelconque des revendications ci-dessus, **caractérisé en ce qu'**au moins l'une des première et seconde sources d'alimentation en courant continu (S1, S2) est munie de moyens de commutation de source d'alimentation (42) pour déconnecter une borne de la source d'alimentation en courant continu (S1, S2, Sn) et de moyens de dérivation (44) pour contourner la source d'alimentation en courant continu déconnectée (S1, S2, Sn).

7. Système de propulsion électrique (10) selon l'une des revendications ci-dessus, **caractérisé en ce que** la ligne de compensation (31) est munie d'un dispositif de commutation de ligne de compensation (50) avec lequel la ligne de compensation (31) peut être interrompue ou connectée.

8. Système de propulsion électrique (10) selon l'une des revendications ci-dessus, **caractérisé en ce que** les modules de machine électrique (16.1, 16.2, 16.n) sont des modules de moteur (M1, M2, Mn) pour la propulsion d'un avion (70) et/ou pour l'entraînement d'unités auxiliaires d'un avion (70).

9. Système de propulsion électrique (10) selon l'une des revendications précédentes, **caractérisé en ce que** les première et deuxième sources de tension continue (S1, S2) sont choisies dans le groupe de sources de tension continue (S1, S2, Sn) comprenant une batterie, un bloc de batteries, un accumulateur, un bloc d'accumulateurs, une pile à combustible, un groupe de piles à combustible, une pile solaire et un bloc de piles solaires.

10. Aéronef (70) comprenant un système de propulsion électrique (10) selon l'une des revendications précédentes.
